(19) Europäisches Patentamt
European Patent Office
Office européen des brevets

(11) **EP 4 416 196 B1**

(12) **EUROPEAN PATENT SPECIFICATION**


(45) Date of publication and mention of the grant of the patent:
**03.12.2025 Bulletin 2025/49**

(21) Application number: **22802551.6**

(22) Date of filing: **11.10.2022**

(51) International Patent Classification (IPC):
***C08F 210/06*** (2006.01) ***C08L 23/12*** (2006.01)
***C08F 4/659*** (2006.01) ***C08J 5/18*** (2006.01)
***B32B 27/32*** (2006.01)

(52) Cooperative Patent Classification (CPC):
(C-Sets available)
**C08F 210/06; C08J 5/18; C08L 23/12;**
C08F 4/65912; C08F 4/65916; C08F 2420/07;
C08J 2323/16 (Cont.)

(86) International application number:
**PCT/EP2022/078255**

(87) International publication number:
**WO 2023/062010 (20.04.2023 Gazette 2023/16)**


(54) **A PROPYLENE-ETHYLENE RANDOM COPOLYMER WITH HIGHLY RANDOMIZED ETHYLENE DISTRIBUTION**

PROPYLEN-ETHYLEN-RANDOM-COPOLYMER MIT HOCHRANDOMISIERTER ETHYLENVERTEILUNG

COPOLYMÈRE ALÉATOIRE DE PROPYLÈNE-ÉTHYLÈNE À DISTRIBUTION D’ÉTHYLÈNE HAUTEMENT ALÉATOIRE


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.10.2021 EP 21202681**

(43) Date of publication of application:
**21.08.2024 Bulletin 2024/34**



(73) Proprietor: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**

(74) Representative: **Maiwald GmbH**
**Elisenhof**
**Elisenstraße 3**
**80335 München (DE)**



(56) References cited:
**EP-B1- 3 280 768**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6492;**
**C08F 210/06, C08F 4/65927;**
**C08L 23/12, C08L 23/12;**
C08F 210/06, C08F 210/16, C08F 2500/12, C08F 2500/27;
C08F 210/06, C08F 210/16, C08F 2500/12, C08F 2500/27, C08F 2500/34, C08F 2500/33, C08F 2500/30, C08F 2500/31, C08F 2500/26, C08F 2500/35

## Description

### Field of the Invention

The present invention relates to a monophasic propylene-ethylene random copolymer composition, articles, especially films, comprising said composition and a process for producing said composition.

### Background to the Invention

Propylene ethylene copolymers are widely used in the field of film manufacture, due to their beneficial balance of optical, mechanical and sealing properties. In particular, high transparency and high impact strength are highly valued. Whilst there are solutions in the art that achieve excellent results in optimizing one or more of these properties, an improvement in one property typically comes at the expense of another property.

WO 2014/154610 A1 describes bimodal random propylene-ethylene copolymers polymerized in the presence of a metallocene catalyst, having high xylene cold soluble content. These copolymers are highly suitable for packaging applications, but no discussion of film properties, either optical, mechanical or sealing is made. Moreover, the high soluble fraction content limits applicability for some food contact and medical applications.

WO 2014/187686 A1 describes bimodal random propylene-ethylene copolymers polymerized in the presence of a Ziegler-Natta catalyst, having a medium level of isolated to block ethylene sequences (i.e. randomness). Although impressive mechanical properties are observed, the optical properties leave room for further improvement and sealing properties are not discussed. Moreover, also here higher ethylene content causes a high soluble fraction content limiting applicability.

EP 3 280 768 A1 discloses polymer compositions with high impact strength and good optical properties, along with good softness and low sealing initial temperature, wherein said compositions comprise specific polypropylene copolymer matrices and specifically selected elastomeric modifiers.

The object of the present invention is to provide a polymer composition that enables the person skilled in the art to produce a film, more preferably a blown film, having a beneficial balance of optical, mechanical and sealing properties while also being characterized by a low soluble fraction content.

Summary of the Invention

The present invention is based upon the finding that a monophasic propylene-ethylene random copolymer composition comprising two propylene-ethylene random copolymer fractions, having defined ethylene contents and particularly high relative content of isolated to block ethylene sequences has improved optical, mechanical and sealing properties.

The present invention is directed to a monophasic propylene-ethylene random copolymer composition (R-PP), comprising:

a) 30 to 70 wt.-%, relative to the total weight of the propylene-ethylene random copolymer composition (R-PP), of a first propylene-ethylene random copolymer fraction (R-PP1), having an ethylene content, determined by quantitative $^{13}C$-NMR spectroscopy, in the range from 0.1 to 5.0 mol-%;

b) 30 to 70 wt.-%, relative to the total weight of the propylene-ethylene random copolymer composition (R-PP), of a second propylene-ethylene random copolymer fraction (R-PP2), having an ethylene content, determined by quantitative $^{13}C$-NMR spectroscopy, in the range from 0.1 to 10.0 mol-%;

wherein the first propylene-ethylene random copolymer fraction (R-PP1) and the second propylene-ethylene random copolymer fraction (R-PP2) combined make up at least 90 wt.-% of the total weight of the propylene-ethylene random copolymer composition (R-PP), wherein the ratio of the ethylene content of the propylene-ethylene random copolymer composition (R-PP) to the ethylene content of the first propylene ethylene random copolymer fraction (R-PP1), both determined by quantitative $^{13}C$-NMR spectroscopy and expressed in mol-%, ([C2(R-PP)]/[C2(R-PP1)]) is more than or equal to 1.00,

wherein the propylene-ethylene random copolymer composition (R-PP) has a melting temperature, determined according to DSC analysis, in the range from 120 to 145 °C and a content of 2,1-regiodefects, as determined by quantitative $^{13}C$-NMR spectroscopy, in the range from 0.05 to 1.40 mol-%,

wherein the propylene-ethylene random copolymer composition (R-PP) has a relative content of isolated to block ethylene sequences, I(E), of more than or equal to 70.0% and wherein the relative content of isolated to block ethylene sequences, I(E), and the C2 content of the propylene-ethylene random copolymer composition, C2(R-PP), fulfil inequation (I),

$$I(E) - 3.79[C2(R\text{-}PP)] \geq 52.0 \quad (I),$$

wherein the I(E) content is defined by equation (II):

$$I(E) = \frac{fPEP}{(fEEE + f\text{PEE} + fPEP)} \times 100 \quad (II)$$

wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample wherein all sequence concentrations being based on a statistical triad analysis of $^{13}$C-NMR data.

In a further embodiment, the present invention is directed to a process for producing the monophasic propylene-ethylene random copolymer composition (R-PP) of the invention, comprising the steps of:

a) polymerizing propylene and ethylene comonomer units in a first polymerization reactor in the presence of a single-site catalyst to produce a first polymerization mixture comprising the first propylene-ethylene random copolymer fraction (R-PP1) and the single-site catalyst, wherein the first polymerization reactor is preferably a slurry reactor, more preferably a loop reactor;
b) transferring the first polymerization mixture into a second polymerization reactor, preferably a gas phase reactor;
c) polymerizing propylene and ethylene comonomer units in said second polymerization reactor in the presence of said single-site catalyst to produce a second polymerization mixture comprising the first propylene-ethylene random copolymer fraction (R-PP1), the second propylene-ethylene random copolymer fraction (R-PP2) and the single-site catalyst;
d) withdrawing said second polymerization mixture from said second polymerization reactor; and
e) compounding said second polymerization mixture optionally with the addition of additives to form the monophasic propylene-ethylene random copolymer composition (R-PP).

In a final embodiment, the present invention is directed to an article, more preferably a film, comprising the monophasic propylene-ethylene random copolymer composition (R-PP) of the invention in an amount of at least 75 wt.-%, more preferably at least 90 wt.-%, most preferably at least 95 wt.-%

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene random copolymer is a copolymer of propylene monomer units and comonomer units, preferably selected from ethylene and $C_4$-$C_8$ alpha-olefins, in which the comonomer units are distributed randomly over the polymeric chain. The propylene random copolymer can comprise comonomer units from one or more comonomers different in their amounts of carbon atoms.

Typical for monophasic propylene homopolymers and monophasic propylene random copolymers is the presence of only one glass transition temperature.

Bimodal polymers are polymers having a bimodal distribution of one or more properties. Bimodal random propylene-ethylene copolymers may typically be bimodal with respect to ethylene content or bimodal with respect to molecular weight (as seen through the melt flow rates of the first fraction and the final composition).

## Detailed Description

The monophasic propylene-ethylene random copolymer composition (R-PP) comprises 30 to 70 wt.-%, relative to the total weight of the monophasic propylene-ethylene random copolymer composition (R-PP), of a first propylene-ethylene random copolymer fraction (R-PP1) and 30 to 70 wt.-%, relative to the total weight of the monophasic propylene-ethylene random copolymer composition (R-PP), of a second propylene-ethylene random copolymer fraction (R-PP2).

More preferably, the monophasic propylene-ethylene random copolymer composition (R-PP) comprises 45 to 67 wt.-%, relative to the total weight of the monophasic propylene-ethylene random copolymer composition (R-PP), of a first propylene-ethylene random copolymer fraction (R-PP1) and 33 to 55 wt.-%, relative to the total weight of the monophasic propylene-ethylene random copolymer composition (R-PP), of a second propylene-ethylene random copolymer fraction (R-PP2).

It is particularly preferred that the monophasic propylene-ethylene random copolymer composition (R-PP) comprises 55 to 64 wt.-%, relative to the total weight of the monophasic propylene-ethylene random copolymer composition (R-PP), of a first propylene-ethylene random copolymer fraction (R-PP1) and 36 to 45 wt.-%, relative to the total weight of the monophasic propylene-ethylene random copolymer composition (R-PP), of a second propylene-ethylene random copolymer fraction (R-PP2).

The first propylene-ethylene random copolymer fraction (R-PP1) and the second propylene-ethylene random copolymer fraction (R-PP2) combined make up at least 90 wt.-% of the total weight of the monophasic propylene-ethylene random copolymer composition (R-PP), more preferably at least 95 wt.-%, most preferably at least 97 wt.-%.

In addition to the first propylene-ethylene random copolymer fraction (R-PP1) and the second propylene-ethylene random copolymer fraction (R-PP2), the monophasic propylene-ethylene random copolymer composition (R-PP) may comprise further additives known in the art; however, this remaining part shall be not more than 5.0 wt.-%, preferably not more than 3.0 wt.-%, like not more than 2.0 wt.-% within the monophasic propylene-ethylene random copolymer composition (R-PP). For instance, the monophasic propylene-ethylene random copolymer composition (R-PP) may comprise additionally small amounts of additives (A) selected from the group consisting of antioxidants, stabilizers, fillers, colorants, nucleating agents and antistatic agents. In general, they may be incorporated during the compounding of the monophasic propylene-ethylene random copolymer composition (R-PP).

In case the monophasic propylene-ethylene random copolymer composition (R-PP) comprises an $\alpha$-nucleating agent, it is preferred that it is free of $\beta$-nucleating agents. The $\alpha$-nucleating agent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer (as discussed in more detail below), and
(v) mixtures thereof.

Such additives are generally commercially available and are described, for example, in "Plastic Additives Handbook", pages 871 to 873, 5th edition, 2001 of Hans Zweifel.

It is understood that the content of additives (A), given with respect to the total weight of the monophasic propylene-ethylene random copolymer composition (R-PP), includes any carrier polymers used to introduce the additives to said monophasic propylene-ethylene random copolymer composition (R-PP), i.e. masterbatch carrier polymers. An example of such a carrier polymer would be a polypropylene homopolymer in the form of powder.

In one particular embodiment, the monophasic propylene-ethylene random copolymer composition (R-PP) consists of the first propylene-ethylene random copolymer fraction (R-PP1), the second propylene-ethylene random copolymer fraction (R-PP2), and optionally additives (A).

### First propylene-ethylene random copolymer fraction (R-PP1)

The first propylene-ethylene random copolymer fraction (R-PP1) is a copolymer of propylene and ethylene.

The first propylene-ethylene random copolymer fraction (R-PP1) has an ethylene content (C2), as determined by $^{13}$C-NMR spectroscopy, in the range from 0.1 to 5.0 mol-%, more preferably in the range from 1.0 to 4.0 mol-%, most preferably in the range from 1.5 to 3.5 mol-%.

The first propylene-ethylene random copolymer fraction (R-PP1) preferably has a melt flow rate ($MFR_2$),

determined according to ISO 1133 at 230 °C at a load of 2.16 kg, in the range from 0.3 to 20 g/10 min, more preferably in the range from 0.5 to 15 g/10 min, most preferably in the range from 1.5 to 11 g/10 min.

**Second propylene-ethylene random copolymer fraction (R-PP2)**

The second propylene-ethylene random copolymer fraction (R-PP2) is a copolymer of propylene and ethylene.

The second propylene-ethylene random copolymer fraction (R-PP2) has an ethylene content (C2), as determined by $^{13}$C-NMR spectroscopy, in the range from 0.1 to 10.0 mol-%, more preferably in the range from 2.0 to 8.0 mol-%, most preferably in the range from 3.0 to 7.0 mol-%.

The second propylene-ethylene random copolymer fraction (R-PP2) preferably has a melt flow rate ($MFR_2$), determined according to ISO 1133 at 230 °C at a load of 2.16 kg, in the range from 0.3 to 20 g/10 min, more preferably in the range from 0.5 to 15 g/10 min, most preferably in the range from 1.5 to 11 g/10 min.

**Properties of the monophasic propylene-ethylene random copolymer composition (R-PP)**

The monophasic propylene-ethylene random copolymer composition (R-PP) has a melt flow rate ($MFR_2$), determined according to ISO 1133 at 230 °C at a load of 2.16 kg, in the range from 0.3 to 20 g/10 min, more preferably in the range from 0.5 to 15 g/10 min, most preferably in the range from 1.5 to 11 g/10 min.

The monophasic propylene-ethylene random copolymer composition (R-PP) may be bimodal with respect to molecular weight (as indicated by melt flow rate values). As such, it is preferred that the ratio of the melt flow rate ($MFR_2$) of the monophasic propylene-ethylene random copolymer composition (R-PP) to the melt flow rate ($MFR_2$) of the first propylene-ethylene random copolymer fraction (R-PP1), both determined according to ISO 1133 at 230 °C at a load of 2.16 kg and expressed in g/10 min, ([MFR(R-PP)]/[MFR(R-PP1)]) of less than 1.00.

The monophasic propylene-ethylene random copolymer composition (R-PP) has an ethylene content (C2), as determined by $^{13}$C-NMR spectroscopy, in the range from 0.1 to 10.0 mol-%, more preferably in the range from 1.0 to 7.0 mol-%, most preferably in the range from 2.0 to 5.0 mol-%.

The monophasic propylene-ethylene random copolymer composition (R-PP) may be bimodal with respect to ethylene content. As such, the ratio of the ethylene content of the monophasic propylene-ethylene random copolymer composition (R-PP) to the ethylene content of the first propylene-ethylene random copolymer fraction (R-PP1), both determined by quantitative $^{13}$C-NMR spectroscopy and expressed in mol-%, ([C2(R-PP)]/[C2(R-PP1)]) is more than or equal to 1.00, more preferably in the range from 1.10 to 3.00, most preferably in the range from 1.25 to 2.00.

The term "2,1 regio defects" as used in the present invention defines the sum of 2,1 erythro regio-defects and 2,1 threo regio-defects

The presence of 2,1-regiodefects in the monophasic propylene-ethylene random copolymer composition (R-PP) is indicative that the random propylene copolymer (R-PP) has been polymerized in the presence of a single site catalyst (SSC).

It is therefore also preferred that the monophasic propylene-ethylene random copolymer composition (R-PP) has been polymerized in the presence of a single site catalyst (SSC), more preferably a metallocene catalyst.

The monophasic propylene-ethylene random copolymer composition (R-PP) further has a content of 2,1-regiodefects, as determined by quantitative $^{13}$C-NMR spectroscopy, in the range from 0.05 to 1.40 mol-%, more preferably in the range from 0.40 to 1.00 mol-%, most preferably in the range from 0.65 to 0.85 mol-%.

The content of 2,1-regiodefects may be dependent on the amount of comonomer, with higher amounts of comonomers often associated with lower content of 2,1-regiodefects.

The content of 2,1-regiodefects may also be dependent on the polymerization temperature, with higher temperatures often associated with lower content of 2,1-regiodefects.

The monophasic propylene-ethylene random copolymer composition (R-PP) preferably has a xylene cold soluble content (XCS), as determined according to ISO 16152, in the range from 0.05 to 15.0 wt.-%, more preferably in the range from 0.10 to 8.0 wt.-%, most preferably in the range from 0.15 to 4.0 wt.-%, like in the range of 0.20 to 3.0 wt.-%.

As the monophasic propylene-ethylene random copolymer composition (R-PP) is not a heterophasic system comprising an elastomeric rubber layer, the monophasic propylene-ethylene random copolymer composition (R-PP) preferably does not have a glass transition temperature below -30 °C, more preferably does not have a glass transition temperature below -25 °C, most preferably does not have a glass transition temperature below -20 °C. The monophasic propylene-ethylene random copolymer composition (R-PP) has a melting temperature, determined according to DSC analysis, in the range from 120 to 145 °C, more preferably in the range from 124 to 140 °C, most preferably in the range from 128 to 135 °C.

It is also preferred that the monophasic propylene-ethylene random copolymer composition (R-PP) has a crystallization temperature, determined according to DSC analysis, in the range from 88 to 100 °C, more preferably in the range from 89 to 99 °C, most preferably in the range from 90 to 98 °C.

The monophasic propylene-ethylene random copolymer composition (R-PP) is further defined by its relative content of isolated to block ethylene sequences, I(E).

The I(E) content is defined by equation (II):

$$I(E) = \frac{fPEP}{(fEEE + f\mathrm{PEE} + fPEP)} \times 100 \qquad \text{(II)}$$

wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample wherein all sequence concentrations being based on a statistical triad analysis of $^{13}$C-NMR data.

This parameter is used as an indication of how random the insertion of ethylene is within the polypropylene chain.

The monophasic propylene-ethylene random copolymer composition (R-PP) has a relative content of isolated to block ethylene sequences, I(E), of more than or equal to 70.0%, more preferably of more than or equal to 71.0%, most preferably of more than or equal to 73.0%. The value of I(E) will normally not be higher than 95.0%.

Furthermore, it is known that the relative content of isolated to block ethylene sequences, I(E), is dependent on the total ethylene content, with higher total ethylene contents leading to higher I(E) values.

As such, the monophasic propylene-ethylene random copolymer composition (R-PP) is further characterized by the relationship between the I(E) value and the total ethylene content.

The relative content of isolated to block ethylene sequences, I(E), and the C2 content of the propylene-ethylene random copolymer composition, C2(R-PP), must fulfil inequation (I):

$$\mathrm{I(E)} - 3.79[\mathrm{C2(R\text{-}PP)}] \geq 52.0 \qquad \text{(I)},$$

More preferably, the relative content of isolated to block ethylene sequences, I(E), and the C2 content of the propylene-ethylene random copolymer composition, C2(R-PP), fulfil inequation (Ia):

$$\mathrm{I(E)} - 3.79[\mathrm{C2(R\text{-}PP)}] \geq 57.0 \qquad \text{(Ia)}.$$

Most preferably, the relative content of isolated to block ethylene sequences, I(E), and the C2 content of the propylene-ethylene random copolymer composition, C2(R-PP), fulfil inequation (Ib)

$$\mathrm{I(E)} - 3.79[\mathrm{C2(R\text{-}PP)}] \geq 61.0 \qquad \text{(Ib)}.$$

The monophasic propylene-ethylene random copolymer composition (R-PP) preferably has a flexural modulus, determined according to ISO 178 using 80x10x4 mm$^3$ test bars injection moulded in line with EN ISO 1873-2, in the range from 500 to 1500 MPa, more preferably in the range from 600 to 1200 MPa, most preferably in the range from 700 to 1000 MPa

Furthermore, the monophasic propylene-ethylene random copolymer composition (R-PP) has a Charpy Notched impact strength at 23 °C, determined according to ISO 179 using on 80x10x4 mm$^3$ test bars injection moulded in line with EN ISO 1873-2, in the range from 2.0 to 20.0 kJ/m$^2$, more preferably in the range from 3.5 to 15.0 kJ/m$^2$, most preferably in the range from 5.0 to 10.0 kJ/m$^2$

It is preferred that the monophasic propylene-ethylene random copolymer composition (R-PP) has at least one of a number of properties typically used to characterize films, determined on 50 $\mu$m blown films produced from the monophasic propylene-ethylene random copolymer composition (R-PP).

As such, it is preferred that the monophasic propylene-ethylene random copolymer composition (R-PP) has a sealing initiation temperature (SIT), measured on a 50 $\mu$m blown film, in the range from 105 to 130 °C, more preferably in the range from 109 to 125 °C, most preferably in the range from 113 to 120 °C.

The difference between the melting temperature of the monophasic propylene-ethylene random copolymer composition (R-PP), determined according to DSC analysis, and the sealing initiation temperature (SIT) is preferably in the range from 10 to 25 °C, more preferably in the range from 12 to 20 °C, most preferably in the range from 14 to 17 °C

It is preferred that the monophasic propylene-ethylene random copolymer composition (R-PP) has a dart-drop

impact strength (DDI), determined according to ASTM D1709, method A on a 50 μm blown film, in the range from 40 to 100 g, more preferably in the range from 45 to 90 g, most preferably in the range from 50 to 80 g.

It is also preferred that the monophasic propylene-ethylene random copolymer composition (R-PP) has a tensile modulus in the machine direction (MD), measured according to ISO 527-3 on a 50 μm blown film, in the range from 500 to 2000 MPa, more preferably in the range from 700 to 1600 MPa, most preferably in the range from 800 to 1200 MPa.

It is further preferred that the monophasic propylene-ethylene random copolymer composition (R-PP) has a tensile modulus in the transverse direction (TD), measured according to ISO 527-3 on a 50 μm blown film, in the range from 500 to 2000 MPa, more preferably in the range from 800 to 1700 MPa, most preferably in the range from 1000 to 1400 MPa.

Finally, it is preferred that the monophasic propylene-ethylene random copolymer composition (R-PP) has a haze value, determined according to ASTM D1003 on a 50 μm blown film, in the range from 0.0 to 10.0%, more preferably in the range from 0.0 to 8.0%, most preferably in the range from 0.0 to 6.0%.

**Process**

The present invention is further directed to a process for producing the monophasic propylene-ethylene random copolymer composition (R-PP) according to the present invention.

Said process comprises the steps of:

a) polymerizing propylene and ethylene comonomer units in a first polymerization reactor (R1) in the presence of a single-site catalyst to produce a first polymerization mixture comprising the first propylene-ethylene random copolymer fraction (R-PP1) and the single-site catalyst , wherein the first polymerization reactor is preferably a slurry reactor (SR), more preferably a loop reactor (LR);

b) transferring the first polymerization mixture into a second polymerization reactor (R2), preferably a gas phase reactor (GPR);

c) polymerizing propylene and ethylene comonomer units in said second polymerization reactor (R2) in the presence of said single-site catalyst to produce a second polymerization mixture comprising the first propylene-ethylene random copolymer fraction (R-PP1), the second propylene-ethylene random copolymer fraction (R-PP2) and the single-site catalyst;

d) withdrawing said second polymerization mixture from said second polymerization reactor (R2); and

e) compounding said second polymerization mixture optionally with the addition of additives to form the monophasic propylene-ethylene random copolymer composition (R-PP).

It is preferred that the operating temperature in the first polymerization reactor (R1) is in the range from 62 to 85 °C, more preferably in the range from 65 to 82 °C, still more preferably in the range from 67 to 80 °C.

Alternatively or additionally to the previous paragraph it is preferred that the operating temperature in the second polymerization reactor (R2) is in the range from 75 to 95 °C, more preferably in the range from 78 to 92 °C.

Typically, the pressure in the first polymerization reactor (R1), preferably in the loop reactor (LR), is in the range from 20 to 80 bar, preferably 30 to 70 bar, like 35 to 65 bar, whereas the pressure in the second polymerization reactor (R2), i.e. in the gas phase reactor (GPR), is in the range from 5 to 50 bar, preferably 15 to 40 bar.

Preferably hydrogen is added in each polymerization reactor in order to control the molecular weight, i.e. the melt flow rate $MFR_2$.

The preparation of the propylene-ethylene random copolymer can comprise in addition to the (main) polymerization of the propylene-ethylene random copolymer in the at two polymerization reactors (R1 and R2) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the single site catalyst (SSC). According to this embodiment, the single site catalyst is introduced to the pre-polymerization step. However, this shall not exclude the option that at a later stage for instance further co-catalyst is added in the polymerization process, for instance in the first reactor (R1). In one embodiment, all components of the single site catalyst are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further,

antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the single site catalyst (SSC) and the polypropylene (Pre-PP) produced in the pre-polymerization reactor (PR) is obtained. Preferably, the single site catalyst (SSC) is (finely) dispersed in the polypropylene (Pre-PP). In other words, the single site catalyst (SSC) particles introduced in the pre-polymerization reactor (PR) are split into smaller fragments that are evenly distributed within the growing polypropylene (Pre-PP). The sizes of the introduced single site catalyst (SSC) particles as well as of the obtained fragments are not of essential relevance for the instant invention and within the skilled knowledge.

As mentioned above, if a pre-polymerization is used, subsequent to said pre-polymerization, the mixture (MI) of the single site catalyst (SSC) and the polypropylene (Pre-PP) produced in the pre-polymerization reactor (PR) is transferred to the first reactor (R1). Typically the total amount of the polypropylene (Pre-PP) in the final bimodal propylene-ethylene copolymer (R-PP) is rather low and typically not more than 5.0 wt.-%, more preferably not more than 4.0 wt.-%, still more preferably in the range from 0.5 to 4.0 wt.-%, like in the range 1.0 of to 3.0 wt.-%.

In case that pre-polymerization is not used, propylene and the other ingredients such as the single site catalyst (SSC) are directly introduced into the first polymerization reactor (R1).

In one embodiment, the present invention is directed to a monophasic propylene-ethylene random copolymer composition (R-PP) as described above that is obtainable, more preferably obtained, through the process as described herein. All preferable embodiments and fall back positions given for the monophasic propylene-ethylene random copolymer composition (R-PP) above and below apply mutatis mutandis to the monophasic propylene-ethylene random copolymer composition (R-PP) being obtainable, more preferably obtained, through the process as described herein.

**Catalyst system**

The single site catalyst according to the present invention may be any supported metallocene catalyst suitable for the production of isotactic polypropylene.

It is preferred that the single site catalyst (SSC) comprises a metallocene complex, a co-catalyst system comprising an aluminoxane co-catalyst, and a silica support.

In particular, it is preferred that the single site catalyst (SSC) comprises

(i) a metallocene complex of the general formula (III)

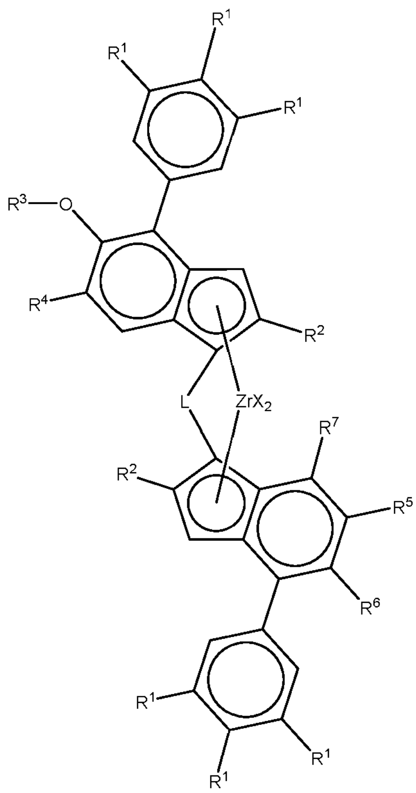

Formula (III)

wherein each X independently is a sigma-donor ligand,

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,

each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,

each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,

$R^4$ is a $C(R^9)_3$ group, with $R^9$ being a linear or branched $C_1$-$C_6$-alkyl group,

$R^5$ is hydrogen or an aliphatic $C_1$-$C_{20}$-hydrocarbyl group optionally containing one or more heteroatoms from groups 14-16 of the periodic table;

$R^6$ is hydrogen or an aliphatic $C_1$-$C_{20}$-hydrocarbyl group optionally containing one or more heteroatoms from groups 14-16 of the periodic table; or

$R^5$ and $R^6$ can be taken together to form a 5 membered saturated carbon ring which is optionally substituted by n groups $R^{10}$, n being from 0 to 4;

each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;

$R^7$ is H or a linear or branched $C_1$-$C_6$-alkyl group or an aryl or heteroaryl group having 6 to 20 carbon atoms optionally substituted by one to three groups $R^{11}$,

each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group,

(ii) an aluminoxane co-catalyst, and

(iii) a silica support.

The term "sigma-donor ligand" is well understood by the person skilled in the art, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$ to $C_{20}$ alkyl, $C_2$ to $C_{20}$ alkenyl, $C_2$ to $C_{20}$ alkynyl, $C_3$ to $C_{12}$ cycloalkyl, $C_6$ to $C_{20}$ aryl, $C_7$ to $C_{20}$ arylalkyl, $C_7$ to $C_{20}$ alkylaryl, $C_8$ to $C_{20}$ arylalkenyl, in which the R' group can optionally contain one or more heteroatoms belonging to groups 14 to 16. In a preferred embodiment the anionic ligands "X" are identical and either halogen, like Cl, or methyl or benzyl.

A preferred monovalent anionic ligand is halogen, in particular chlorine (Cl).

Preferred complexes of the metallocene catalyst include:

rac-dimethylsilanediylbis[2-methyl-4-(3',5 '-dimethylphenyl)-5-methoxy-6-tert-butylinden-1- yl] zirconium dichloride,

rac-anti-dimethylsilanediyl[2-methyl-4-(4'-tert-butylphenyl)-inden-1-yl][2-methyl-4-(4'-tertbutylphenyl)-5-methoxy-6-tert-butylinden-1-yl] zirconium dichloride,

rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,

rac-anti-dimethylsilanediyl[2-methyl-4-(3',5'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,

rac-anti-dimethylsilanediyl[2-methyl-4,8-bis-(4'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,

rac-anti-dimethylsilanedlyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride,

rac-anti-dimethylsilanediyl[2-methyl-4,8-bis-(3',5 '-dimethylphenyl)-1,5,6,7-tetrahydro-s-indacen-1-yl][2-methyl-4-(3',5'-5 ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride.

The ligands required to form the complexes and hence catalysts of the invention can be synthesised by any process and the skilled organic chemist would be able to devise various synthetic protocols for the manufacture of the necessary ligand materials. For Example WO2007/116034 discloses the necessary chemistry. Synthetic protocols can

also generally be found in WO 2002/02576, WO 2011/135004, WO 2012/084961, WO 2012/001052, WO 2011/076780, WO 2015/158790 and WO 2018/122134. Especially reference is made to WO 2019/179959, in which the most preferred catalyst of the present invention is described.

**Cocatalyst**

To form an active catalytic species it is normally necessary to employ a cocatalyst as is well known in the art.
According to the present invention an aluminoxane co-catalyst is used in combination with the above defined metallocene catalyst complex.
The aluminoxane co-catalyst can be one of formula (IV):

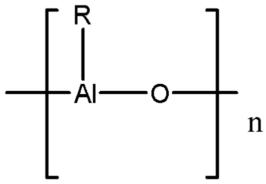

(IV)

where n is usually from 6 to 20 and R has the meaning below.
Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_3$ alkyl, or $C_3$-$C_{10}$, cycloalkyl, $C_7$-$C_{12}$ arylalkyl or alkylaryl and/or phenyl or naphthyl, and where Y can be hydrogen, halogen, preferably chlorine or bromine, or $C_1$-$C_{10}$ alkoxy, preferably methoxy or ethoxy. The resulting oxygen-containing aluminoxanes are not in general pure compounds but mixtures of oligomers of the formula (IV).
The preferred aluminoxane is methylaluminoxane (MAO). Since the aluminoxanes used as co-catalysts according to the invention are not, owing to their mode of preparation, pure compounds, the molarity of aluminoxane solutions hereinafter is based on their aluminium content.
The catalyst system of the invention is used in supported form. The particulate support material used is silica or a mixed oxide such as silica-alumina, in particular silica. The use of a silica support is preferred. The skilled practitioner is aware of the procedures required to support a metallocene catalyst.
In a preferred embodiment, the catalyst system corresponds to the CCS4 of WO 2020/239602 A1.

**Article**

In a final embodiment, the present invention is directed to an article comprising the monophasic propylene-ethylene random copolymer composition (R-PP) in an amount of at least 75 wt.-%, more preferably at least 90 wt.-%, most preferably at least 95 wt.-%.
Other polymeric components in addition to the monophasic propylene-ethylene random copolymer composition (R-PP) can be present in the article; however, it is preferred that the monophasic propylene-ethylene random copolymer composition (R-PP) is the only polymeric component in the article.
In one particularly preferred embodiment, the article consists of the monophasic propylene-ethylene random copolymer composition (R-PP).
The article according to the present invention is preferably a film, more preferably a blown film.
It is preferred that the film, more preferably the blown film, has a thickness in the range from 5 to 100 μm, more preferably in the range from 10 to 80 μm, most preferably in the range from 20 to 70 μm.
The film, more preferably the blown film, according to the present invention preferably has a sealing initiation temperature (SIT) in the range from 105 to 130 °C, more preferably in the range from 109 to 125 °C, most preferably in the range from 113 to 120 °C.
The difference between the melting temperature of the monophasic propylene-ethylene random copolymer composition (R-PP), determined according to DSC analysis, and the sealing initiation temperature (SIT) of the film, more preferably the blown film, is preferably in the range from 10 to 25 °C, more preferably in the range from 12 to 20 °C, most preferably in the range from 14 to 17 °C.
The film, more preferably the blown film, according to the present invention preferably has a dart-drop impact strength (DDI), determined according to ASTM D1709, method A, in the range from 40 to 100 g, more preferably in the range from 45 to 90 g, most preferably in the range from 50 to 80 g.
The film, more preferably the blown film, according to the present invention preferably has a tensile modulus in the machine direction (MD), measured according to ISO 527-3, in the range from 500 to 2000 MPa, more preferably in the

range from 700 to 1600 MPa, most preferably in the range from 800 to 1200 MPa.

The film, more preferably the blown film, according to the present invention preferably has a tensile modulus in the transverse direction (TD), measured according to ISO 527-3, in the range from 500 to 2000 MPa, more preferably in the range from 800 to 1700 MPa, most preferably in the range from 1000 to 1400 MPa.

The film, more preferably the blown film, according to the present invention preferably has a haze value, determined according to ASTM D1003, in the range from 0.0 to 10.0%, more preferably in the range from 0.0 to 8.0%, most preferably in the range from 0.0 to 6.0%.

## EXAMPLES

### A. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the isotacticity and regio-regularity of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For polymers approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra. Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (mmmm\ /\ \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propylene was quantified based on the methyl region with correction undertaken for sites included in this region not related to primary insertion and for primary insertion sites excluded from this region:

$$P_{12} = I_{CH3} + P_{12e}$$

The total amount of propylene was quantified as the sum of primary inserted propylene and all other present regio-defects:

$$P_{total} = P_{12} + P_{21e}$$

The mole percent of 2,1 erythro regio-defects was quantified with respect to all propylene:

$$[21e] \text{ mol-\%} = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E \text{ [mol-\%]} = 100 * fE$$

The weight percent comonomer incorporation was calculated from the mole fraction:

$$E \text{ [wt.-\%]} = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

The relative content of isolated to block ethylene incorporation was calculated from the triad sequence distribution using the following relationship (equation (II)):

$$I(E) = \frac{fPEP}{(fEEE + f\text{PEE} + fPEP)} \times 100 \qquad \text{(II)}$$

wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample

**Calculation** of comonomer content of the second propylene-ethylene random copolymer fraction (R-PP2):

$$\frac{C(PP) - w(PP1)x\,C(PP1)}{w(PP2)} = C(PP2) \quad (V)$$

wherein

w(PP1) is the weight fraction [in wt.-%] of the first propylene-ethylene random copolymer fraction (R-PP1),
w(PP2) is the weight fraction [in wt.-%] of second propylene-ethylene random copolymer fraction (R-PP2),
C(PP1) is the comonomer content [in mol-%] of the first propylene-ethylene random copolymer fraction (R-PP1),
C(PP) is the comonomer content [in mol-%] of the monophasic propylene-ethylene random copolymer composition (R-PP),
C(PP2) is the calculated comonomer content [in mol-%] of the second propylene-ethylene random copolymer fraction (R-PP2).

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.
**Calculation** of melt flow rate $MFR_2$ (230 °C) of the second propylene-ethylene random copolymer fraction (PP2):

$$MFR(PP2) = 10^{\left[\frac{\log(MFR(PP)) - w(PP1)\ x \log(MFR(PP1))}{w(PP2)}\right]} \quad (VI)$$

wherein

w(PP1) is the weight fraction [in wt.-%] of the first propylene-ethylene random copolymer fraction (R-PP1),
w(PP2) is the weight fraction [in wt.-%] of second propylene-ethylene random copolymer fraction (R-PP2),
MFR(PP1) is the melt flow rate $MFR_2$ (230 °C) [in g/10min] of the first propylene-ethylene random copolymer fraction (R-PP1),
MFR(PP) is the melt flow rate $MFR_2$ (230 °C) [in g/10min] of the monophasic propylene-ethylene random copolymer composition (R-PP),
MFR(PP2) is the calculated melt flow rate $MFR_2$ (230 °C) [in g/10min] of the second propylene-ethylene random copolymer fraction (R-PP2).

**The xylene soluble fraction at room temperature (XCS, wt.-%):** The amount of the polymer soluble in xylene is determined at 25 °C according to ISO 16152; 5th edition; 2005-07-01.
**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) are determined from the cooling step, while melting temperature ($T_m$) and melting enthalpy ($H_f$) are determined from the second heating step.
**The glass transition temperature Tg** is determined by dynamic mechanical analysis according to ISO 6721-7. The measurements are done in torsion mode on compression moulded samples (40x10x1 $mm^3$) between -100 °C and +150 °C with a heating rate of 2 °C/min and a frequency of 1 Hz.
**The Flexural Modulus** is determined according to ISO 178 method A (3-point bending test) on 80 mm × 10 mm × 4 mm specimens. Following the standard, a test speed of 2 mm/min and a span length of 16 times the thickness was used. The testing temperature was 23±2° C. Injection moulding was carried out according to ISO 19069-2 using a melt temperature of 230°C for all materials irrespective of material melt flow rate.

**Notched impact strength (NIS)**

The Charpy notched impact strength (NIS) was measured according to ISO 179 1eA at +23°C or -20 °C, using injection moulded bar test specimens of 80x10x4 $mm^3$ prepared in accordance with ISO 19069-2 using a melt temperature of 230°C for all materials irrespective of material melt flow rate.
**Haze** is determined according to ASTM D1003 on blown films with a thickness of 50 $\mu$m produced as indicated below.
**Tensile Modulus** in both the machine (MD) and transvers (TD) directions was determined according to ISO 527-3 at 23 °C on blown films of 50 $\mu$m thickness produced as indicated below. Testing was performed at a cross-head speed of 1 mm/min up to the yield limit and at 10 mm/min up to specimen breakage.
**Dart-drop:** Impact Strength was determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail, the weight is increased. At least 20 specimens are tested. The weight resulting in failure of 50% of the specimens is calculated and this provides the dart drop impact (DDI) value (g). The relative DDI (g/ m) may then calculated by dividing the DDI by the thickness of the film.

**Sealing Initiation Temperature (SIT)**

This method is used to determine the sealing window (sealing temperature range) of films. The procedure is similar to hot tack measurement, but in contrast to hot-tack the sealing range applies to the strength of the seal after it had cooled (delay time of 30 s).
Sealing range = (Seal initiation temperature until Seal end temperature)
The determined results give the user a quantitatively useful indication of the strength of the sealed films and show the temperature range for optimal sealing.
The temperature interval is set by default to 5° C, but can be reduced to 1 ° C when the curve shows a sharp increase or decrease in the force values between two temperature steps in order to represent a better curve profile.
Deviating from ASTM F1921 - 12, the test parameters sealing pressure, cooling time and test speed are modified. The determination of the force/temperature curve is continued until thermal failure of the film. In addition to failure mode evaluations described in the standard, additional failure modes are used.
To characterize the material, the measured values sealing range start temperature (SIT), temperature at max. force (MAX) and sealing range end temperature (SET) are also determined.

Standard conditions:

Conditioning time: > 96 h
Sealing jaws dimension: 50x5 mm
Sealing jaws shape: flat
Sealing jaws coating: Niptef
Sealing temperature: ambient - 240°C
Sealing temperature interval: 5 °C
Sealing time: 1 sec
Delay time: 30 sec
Sealing pressure: 0,4 N/$mm^2$ (PE); 0,67 N/$mm^2$ (PP)
Grip separation rate: 42 mm/sec
Sealing initiation force: 5 N
Sample width: 25 mm

Results:

The output of this method is a sealing curve.
The lower limit (Sealing Initiation Temperature - SIT) is the minimum sealing temperature at which a sealing force of ≥ 5 N is achieved

**B. Examples**

The catalyst used in the polymerization process for all examples was *Anti*-dimethylsilanediyl[2-methyl-4,8-di(3,5-dimethylphenyl)-1,5,6,7-tetrahydro-s-indacen-1-yl][2-methyl-4-(3,5-dimethylphenyl)-5-methoxy-6-*tert*-butylinden-1-yl] zirconium dichloride as disclosed in WO 2019/179959 A1 as MC-2.

For the inventive examples, the catalyst system was prepared analogously to Comparative Catalyst System 4 (CCS4) in WO 2020/239602 A1, whereas for comparative example CE1, the catalyst system was prepared analogously to Inventive Catalyst System 3 (ICS3) in WO 2020/239602 A1.

Inventive examples IE1 and IE2 and comparative example CE1 were polymerized according to the conditions given in Table 1 (note: The $MFR_2$ and C2 content given after reactor R2 are the properties of the GPR fraction (i.e. R-PP2) and were calculated from the values measured after the loop reactor (i.e. R-PP1) and in the final pellets (i.e. R-PP), using appropriate mixing rules, as given in the determination methods).

CE2 to CE6 correspond to CE5 to CE9 of WO 2020/239602 A1 and are unimodal propylene homopolymers and copolymers polymerized using the same catalyst system as for the inventive examples IE1 and IE2.

CE7 and CE8 correspond to RC2 and RC3 of WO 2022/043385 A1, being a bimodal propylene-ethylene copolymers polymerized using the same catalyst system as for the comparative example CE1. (Note: CE1 in fact corresponds to RC1 of WO 2011/043385 A1)

CE9 corresponds to PP1 of WO 2016/162359 A1, being a bimodal propylene-ethylene copolymer polymerized using a catalyst system that contains a different metallocene complex to both of the catalyst systems employed for each of the other examples.

**Table 1:** Polymerization conditions for the inventive and comparative propylene-ethylene random copolymers

| | | IE1 | IE2 | CE1 |
|---|---|---|---|---|
| **Prepolymerization (R0)** | | | | |
| Temperature | [°C] | 20 | 20 | 20 |
| Pressure | [kPa] | 4600 | 4600 | 5000 |
| Residence time | [h] | 0.38 | 0.38 | 0.32 |
| **Loop (R1)** | | | | |
| Temperature | [°C] | 70 | 70 | 70 |
| Pressure | [kPa] | 4700 | 4700 | 4900 |
| H2/C3 ratio | [mol/kmol] | 0.13 | 0.16 | 0.10 |
| C2/C3 ratio | [mol/kmol] | 26.5 | 39.0 | 30.1 |
| split | [wt.-%] | 60 | 58 | 57 |
| $MFR_2$ | [g/10 min] | 2.3 | 3.2 | 1.3 |
| C2 content | [mol-%] | 2.07 | 2.55 | 2.90 |
| **GPR (R2)** | | | | |
| Temperature | [°C] | 80 | 80 | 80 |
| Pressure | [kPa] | 2400 | 2400 | 2500 |
| H2/C3 ratio | [mol/kmol] | 1.6 | 2.1 | 1.6 |
| C2/C3 ratio | [mol/kmol] | 121.8 | 168.9 | 88.1 |
| split | [wt.-%] | 40 | 42 | 43 |
| $MFR_2$ | [g/10 min] | 1.9 | 1.3 | 2.7 |
| C2 content | [mol-%] | 3.86 | 6.23 | 4.27 |
| C2(R-PP)/C2(R-PP1) | - | 1.35 | 1.61 | 1.19 |
| MFR(R-PP)/MFR(R-PP1) | - | 0.91 | 0.69 | 1.38 |

**Table 2:** Properties of the inventive and comparative propylene-ethylene random copolymers

| | | IE1 | IE2 | CE1 | CE2 | CE3 | CE4 | CE5 | CE6 | CE7 | CE8 | CE9 |
|---|---|---|---|---|---|---|---|---|---|---|---|---|
| **Composition** | | | | | | | | | | | | |
| $MFR_2$ | [g/10min] | 2.1 | 2.2 | 1.8 | 5.0 | 7.0 | 8.3 | 5.0 | 2.2 | 1.8 | 2.1 | 7.0 |
| XCS | [wt.-%] | 0.37 | 2.8 | 0.64 | - | - | - | - | - | 0.6 | 0.3 | 19.5 |
| C2 content | [mol-%] | 2.79 | 4.11 | 3.45 | 0 | 0.6 | 1.35 | 3.56 | 5.3 | 2.2 | 2.5 | 4.9 |
| 2,1 regiodefects | [mol-%] | 0.79 | 0.71 | 0.62 | 0.98 | 0.83 | 0.78 | 0.49 | 0.33 | 0.70 | 0.48 | 0.50 |
| Tm | [°C] | 134 | 130 | 134 | 151 | 149 | 143 | 135 | 125 | 143 | 142 | 132 |
| Tc | [°C] | 96 | 92 | 98 | - | - | - | - | - | - | - | - |
| Flex Mod | [MPa] | 841 | 711 | n.m. | - | - | - | - | - | - | - | - |
| NIS | [$kJ/m^2$] | 5.48 | 6.96 | n.m. | - | - | - | - | - | - | - | - |
| I(E) | [%] | 73.0 | 78.2 | 69.3 | n/a | 27.5 | 55.7 | 57.5 | 71.2 | 56.0 | 60.0 | 62.0 |
| I(E)-3.79[C2(R-PP)] | [-] | 62.4 | 62.6 | 56.2 | n/a | 25.2 | 50.6 | 44.0 | 51.1 | 47.7 | 50.5 | 43.4 |
| n.m. - not measured, n/a - not applicable | | | | | | | | | | | | |

The films for the examples are produced on a Collin 30 lab scale blown film line. The BUR is 1:2.5, film thickness is 50 μm, and melt temperature is 210 ° C.

**Table 3:** Properties of 50 μm blown films made from the inventive and comparative propylene-ethylene random copolymers

| | | IE1 | IE2 | CE1 |
|---|---|---|---|---|
| Tens Mod (MD) | [MPa] | 1016 | 848 | 1000 |
| Tens Mod (TD) | [MPa] | 1092 | 1041 | 1004 |
| Haze | [%] | 5.85 | 5.03 | 7.31 |
| DDI | [g] | 67 | 55 | 36 |
| SIT | [°C] | 119 | 114 | 119 |
| Tm-SIT | [°C] | 15 | 16 | 15 |

As can be seen from Table 2 and Figure 1, the inventive bimodal propylene-ethylene random copolymer compositions exhibit far higher I(E) values (for a given C2 content) than unimodal CE4 to CE6, indicating that the ethylene incorporation is much more random. Likewise, the choice of catalyst is also shown to have an influence, with CE1, and CE7 to CE9 all having a lower I(E) value than would be expected for an inventive example having such a C2 content.

Furthermore, Figure 2 demonstrates the effect of this increased randomness on the melting temperatures, which are notably lower for the inventive examples than for the comparative examples.

It can furthermore be seen from Table 3 that the inventive examples have much higher dart drop impact strength and lower haze, whilst maintaining similar tensile and sealing properties for a given C2 content (the stiffness is lower for IE2, but this is to be expected due to the much higher C2 content).

## Claims

**1.** A monophasic propylene-ethylene random copolymer composition (R-PP), comprising:

a) 30 to 70 wt.-%, relative to the total weight of the propylene-ethylene random copolymer composition (R-PP), of a first propylene-ethylene random copolymer fraction (R-PP1), having an ethylene content, determined by quantitative $^{13}C$-NMR spectroscopy, in the range from 0.1 to 5.0 mol-%;
b) 30 to 70 wt.-%, relative to the total weight of the propylene-ethylene random copolymer composition (R-PP), of a second propylene-ethylene random copolymer fraction (R-PP2), having an ethylene content, determined by

quantitative $^{13}$C-NMR spectroscopy, in the range from 0.1 to 10.0 mol-%;
wherein the first propylene-ethylene random copolymer fraction (R-PP1) and the second propylene-ethylene random copolymer fraction (R-PP2) combined make up at least 90 wt.-% of the total weight of the propylene-ethylene random copolymer composition (R-PP),
wherein the ratio of the ethylene content of the propylene-ethylene random copolymer composition (R-PP) to the ethylene content of the first propylene ethylene random copolymer fraction (R-PP1), both determined by quantitative $^{13}$C-NMR spectroscopy and expressed in mol-%, ([C2(R-PP)]/[C2(R-PP1)]) is more than or equal to 1.00,
wherein the propylene-ethylene random copolymer composition (R-PP) has a melting temperature, determined according to DSC analysis, in the range from 120 to 145 °C and a content of 2,1-regiodefects, as determined by quantitative $^{13}$C-NMR spectroscopy, in the range from 0.05 to 1.40 mol-%,
wherein the propylene-ethylene random copolymer composition (R-PP) has a relative content of isolated to block ethylene sequences, I(E), of more than or equal to 70.0% and wherein the relative content of isolated to block ethylene sequences, I(E), and the C2 content of the propylene-ethylene random copolymer composition, C2(R-PP), fulfil inequation (I),

$$I(E) - 3.79[C2(R\text{-}PP)] \geq 52.0 \quad (I),$$

wherein the I(E) content is defined by equation (II):

$$I(E) = \frac{fPEP}{(fEEE + f\mathrm{PEE} + fPEP)} \times 100 \qquad (II)$$

wherein

I(E) is the relative content of isolated to block ethylene sequences [in %];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample
wherein all sequence concentrations being based on a statistical triad analysis of $^{13}$C-NMR data.

**2.** The monophasic propylene-ethylene random copolymer composition (R-PP) according to claim 1, having a melt flow rate ($MFR_2$), determined according to ISO 1133 at 230 °C at a load of 2.16 kg, in the range from 0.5 to 20 g/10 min.

**3.** The monophasic propylene-ethylene random copolymer composition (R-PP) according to either claim 1 or claim 2, having a total ethylene content, determined by quantitative $^{13}$C-NMR spectroscopy, in the range from 0.1 to 10.0 mol-%.

**4.** The monophasic propylene-ethylene random copolymer composition (R-PP) according to any one of the preceding claims, having a xylene cold soluble content (XCS), as determined according to ISO 16152, in the range from 0.05 to 15.0 wt.-%.

**5.** The monophasic propylene-ethylene random copolymer composition (R-PP) according to any one of the preceding claims, wherein

a) the first propylene-ethylene random copolymer fraction (R-PP1) has a melt flow rate ($MFR_2$), determined according to ISO 1133 at 230 °C at a load of 2.16 kg, in the range from 0.5 to 20 g/10 min, and
b) the second propylene-ethylene random copolymer fraction (R-PP2) has a melt flow rate ($MFR_2$), determined according to ISO 1133 at 230 °C at a load of 2.16 kg, in the range from 0.5 to 20 g/10 min,

wherein the ratio of the melt flow rate ($MFR_2$) of the propylene-ethylene random copolymer composition (R-PP) to the melt flow rate ($MFR_2$) of the first propylene ethylene random copolymer fraction (R-PP1), both determined according to ISO 1133 at 230 °C at a load of 2.16 kg and expressed in g/10 min, ([MFR(R-PP)]/[MFR(R-PP1)]) is preferably less than or equal to 1.00.

**6.** The monophasic propylene-ethylene random copolymer composition (R-PP) according to any one of the preceding

claims, having a relative content of isolated to block ethylene sequences, I(E), of more than or equal to 71.0%, more preferably of more than or equal to 73.0%.

**7.** The monophasic propylene-ethylene random copolymer composition (R-PP) according to any one of the preceding claims, wherein the relative content of isolated to block ethylene sequences, I(E), and the C2 content of the propylene-ethylene random copolymer composition, C2(R-PP), fulfil inequation (Ia)

$$I(E) - 3.79[C2(R\text{-}PP)] \geq 57.0 \quad (Ia),$$

more preferably the relative content of isolated to block ethylene sequences, I(E), and the C2 content of the propylene-ethylene random copolymer composition, C2(R-PP), fulfil inequation (Ib)

$$I(E) - 3.79[C2(R\text{-}PP)] \geq 61.0 \quad (Ib).$$

**8.** The monophasic propylene-ethylene random copolymer composition (R-PP) according to any one of the preceding claims, having one or more, preferably all, of the following properties:

a) a flexural modulus, determined according to ISO 178 using 80x10x4 $mm^3$ test bars injection moulded in line with EN ISO 1873-2, in the range from 500 to 1500 MPa, and
b) a Charpy Notched impact strength at 23 °C, determined according to ISO 179 using on 80x10x4 $mm^3$ test bars injection moulded in line with EN ISO 1873-2, in the range from 2.0 to 20.0 $kJ/m^2$.

**9.** A process for producing the monophasic propylene-ethylene random copolymer composition (R-PP) according to any one of the preceding claims, comprising the steps of:

a) polymerizing propylene and ethylene comonomer units in a first polymerization reactor in the presence of a single-site catalyst to produce a first polymerization mixture comprising the first propylene-ethylene random copolymer fraction (R-PP1) and the single-site catalyst, wherein the first polymerization reactor is preferably a slurry reactor, more preferably a loop reactor;
b) transferring the first polymerization mixture into a second polymerization reactor, preferably a gas phase reactor;
c) polymerizing propylene and ethylene comonomer units in said second polymerization reactor in the presence of said single-site catalyst to produce a second polymerization mixture comprising the first propylene-ethylene random copolymer fraction (R-PP1), the second propylene-ethylene random copolymer fraction (R-PP2) and the single-site catalyst;
d) withdrawing said second polymerization mixture from said second polymerization reactor; and
e) compounding said second polymerization mixture optionally with the addition of additives to form the monophasic propylene-ethylene random copolymer composition (R-PP).

**10.** The process according to claim 9, wherein the single site catalyst comprises:

(i) a metallocene complex of the general formula (III)

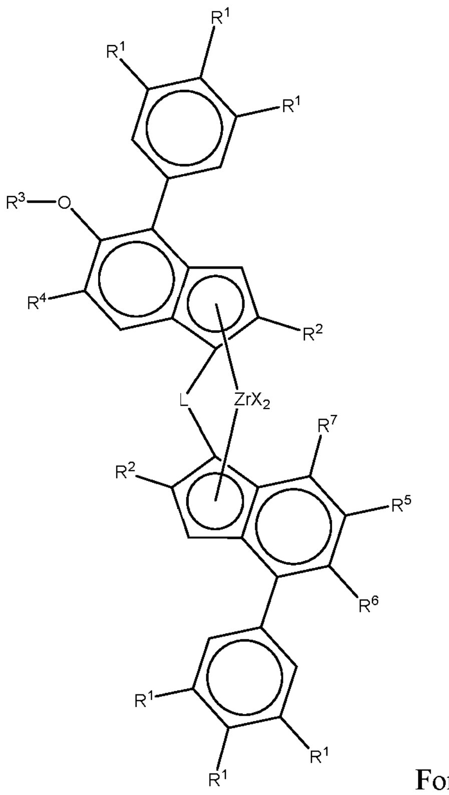

Formula (III)

wherein each X independently is a sigma-donor ligand,
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,
each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,
each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,
$R^3$ is a linear or branched $C_1$-$C_6$-alkyl group, $C_{7-20}$-arylalkyl, $C_{7-20}$-alkylaryl group or $C_6$-$C_{20}$-aryl group,
$R^4$ is a $C(R^9)_3$ group, with $R^9$ being a linear or branched $C_1$-$C_6$-alkyl group,
$R^5$ is hydrogen or an aliphatic $C_1$-$C_{20}$-hydrocarbyl group optionally containing one or more heteroatoms from groups 14-16 of the periodic table;
$R^6$ is hydrogen or an aliphatic $C_1$-$C_{20}$-hydrocarbyl group optionally containing one or more heteroatoms from groups 14-16 of the periodic table; or
$R^5$ and $R^6$ can be taken together to form a 5 membered saturated carbon ring which is optionally substituted by n groups $R^{10}$, n being from 0 to 4;
each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;
$R^7$ is H or a linear or branched $C_1$-$C_6$-alkyl group or an aryl or heteroaryl group having 6 to 20 carbon atoms optionally substituted by one to three groups $R^{11}$, each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group,

(ii) an aluminoxane co-catalyst, and
(iii) a silica support.

11. The monophasic propylene-ethylene random copolymer composition (R-PP) according to any one of claims 1 to 8, wherein the monophasic propylene-ethylene random copolymer composition (R-PP) is obtainable via the process

according to either claim 9 or claim 10.

**12.** An article, more preferably a film, comprising the monophasic propylene-ethylene random copolymer composition (R-PP) according to any one of claims 1 to 8 or 11 in an amount of at least 75 wt.-%, more preferably at least 90 wt.-%, most preferably at least 95 wt.-%.

**13.** The article according to claim 12 being a film, more preferably a blown film, having one or more of, preferably both of, the following properties:

a) a tensile modulus in the machine direction (MD), measured according to ISO 527-3, in the range from 500 to 2000 MPa; and/or
b) a tensile modulus in the transverse direction (TD), measured according to ISO 527-3, in the range from 500 to 2000 MPa.

**14.** The article according to either claim 12 or 13 being a film, more preferably a blown film, having one or more of, preferably both of, the following properties:

a) a haze value, determined according to ASTM D 1003, in the range from 0.0 to 10.0%, and
b) a dart-drop impact strength (DDI), determined according to ASTM D1709, method A, in the range from 40 to 100 g.

**15.** The article according to any one of claims 12 to 14 being a film, more preferably a blown film, having a sealing initiation temperature (SIT) in the range from 105 to 130 °C, preferably wherein the difference between the melting temperature of the monophasic propylene-ethylene random copolymer composition (R-PP), determined according to DSC analysis, and the sealing initiation temperature (SIT) of the film, more preferably the blown film, is in the range from 10 to 25 °C.

## Patentansprüche

**1.** Einphasige statistische Propylen-Ethylen-Copolymer-Zusammensetzung (R-PP), umfassend:

a) 30 bis 70 Gewichtsprozent, bezogen auf das Gesamtgewicht der statistischen Propylen-Ethylen-Copolymer-Zusammensetzung (R-PP), einer ersten statistischen Propylen-Ethylen-Copolymer-Fraktion (R-PP1), welche einen Ethylengehalt, ermittelt durch quantitative $^{13}$C--NMR-Spektroskopie, im Bereich von 0,1 bis 5,0 Mol-% aufweist,
b) 30 bis 70 Gewichtsprozent, bezogen auf das Gesamtgewicht der statistischen Propylen-Ethylen-Copolymer-Zusammensetzung (R-PP), einer zweiten statistischen Propylen-Ethylen-Copolymer-Fraktion (R-PP2), welche einen Ethylengehalt, ermittelt durch quantitative $^{13}$C--NMR-Spektroskopie, im Bereich von 0,1 bis 10,0 Mol-% aufweist,
wobei die erste statistische Propylen-Ethylen-Copolymer-Fraktion (R-PP1) und die zweite statistische Propylen-Ethylen-Copolymer-Fraktion (R-PP2) zusammen mindestens 90 Gewichtsprozent des Gesamtgewichts der statistischen Propylen-Ethylen-Copolymer-Zusammensetzung (R-PP) ausmachen,
wobei das Verhältnis des Ethylengehalts der statistischen Propylen-Ethylen-Copolymer-Zusammensetzung (R-PP) zum Ethylengehalt der ersten statistischen Propylen-Ethylen-Copolymer-Fraktion (R-PP1), beide bestimmt durch quantitative $^{13}$C-NMR-Spektroskopie und ausgedrückt in Mol-%, ([C2(R-PP)]/[C2(R-PP1)]), größer oder gleich 1,00 ist,
wobei die statistische Propylen-Ethylen-Copolymer-Zusammensetzung (R-PP) eine Schmelztemperatur, ermittelt durch DSC-Analyse, im Bereich von 120 bis 145 °C und einen Gehalt an 2,1-Regiodefekten, ermittelt durch quantitative $^{13}$C-NMR-Spektroskopie, im Bereich von 0,05 bis 1,40 Mol-% aufweist,
wobei die statistische Propylen-Ethylen-Copolymer-Zusammensetzung (R-PP) einen relativen Gehalt an isolierten zu Block-Ethylen-Sequenzen, I(E), von größer oder gleich 70,0 % aufweist und der relative Gehalt an isolierten zu Block-Ethylen-Sequenzen, I(E) und der C2-Gehalt der statistischen Propylen-Ethylen-Copolymer-Zusammensetzung, C2(R-PP), die Ungleichung (I) erfüllen:

$$I(E) - 3{,}79[C2(R\text{-}PP)] \geq 52{,}0 \quad (I),$$

wobei der I(E)-Gehalt durch Gleichung (II) definiert ist:

$$I(E) = \frac{fPEP}{(fEEE + fPEE + fPEP)} \times 100 \qquad \text{(II)}$$

wobei

I(E) der relative Gehalt an isolierten zu Block-Ethylen-Sequenzen [in %] ist,
fPEP der Molenbruch der Propylen/Ethylen/Propylen-Sequenzen (PEP) in der Probe ist,
fPEE der Molenbruch der Propylen/Ethylen/Ethylen-Sequenzen (PEE) und der Ethylen/Ethylen/Propylen-Sequenzen (EEP) in der Probe ist,
fEEE der Molenbruch der Ethylen/Ethylen/Ethylen-Sequenzen (EEE) in der Probe ist,
wobei alle Sequenzkonzentrationen auf einer statistischen Triadenanalyse von $^{13}$C-NMR-Daten basieren.

**2.** Einphasige statistische Propylen-Ethylen-Copolymer-Zusammensetzung (R-PP) nach Anspruch 1, die einen Schmelzindex ($MFR_2$), bestimmt nach ISO 1133 bei 230 °C und einer Last von 2,16 kg, im Bereich von 0,5 bis 20 g/10 min aufweist.

**3.** Einphasige statistische Propylen-Ethylen-Copolymer-Zusammensetzung (R-PP) nach Anspruch 1 oder Anspruch 2, die einen Gesamt-Ethylen-Gehalt, ermittelt durch quantitative $^{13}$C-NMR-Spektroskopie, im Bereich von 0,1 bis 10,0 Mol-% aufweist.

**4.** Einphasige statistische Propylen-Ethylen-Copolymer-Zusammensetzung (R-PP) nach einem der vorhergehenden Ansprüche, die einen in kaltem Xylol löslichen Gehalt (XCS), ermittelt nach ISO 16152, im Bereich von 0,05 bis 15,0 Gewichtsprozent aufweist.

**5.** Einphasige statistische Propylen-Ethylen-Copolymer-Zusammensetzung (R-PP) nach einem der vorhergehenden Ansprüche, wobei

a) die erste statistische Propylen-Ethylen-Copolymer-Fraktion (R-PP1) einen Schmelzindex ($MFR_2$), bestimmt nach ISO 1133 bei 230 °C und einer Last von 2,16 kg, im Bereich von 0,5 bis 20 g/10 min aufweist, und
b) die zweite statistische Propylen-Ethylen-Copolymer-Fraktion (R-PP2) einen Schmelzindex ($MFR_2$), bestimmt nach ISO 1133 bei 230 °C und einer Last von 2,16 kg, im Bereich von 0,5 bis 20 g/10 min aufweist,

wobei das Verhältnis des Schmelzindex ($MFR_2$) der statistischen Propylen-Ethylen-Copolymer-Zusammensetzung (R-PP) zum Schmelzindex ($MFR_2$) der ersten statistischen Propylen-Ethylen-Copolymer-Fraktion (R-PP1), beide bestimmt nach ISO 1133 bei 230 °C bei einer Last von 2,16 kg und ausgedrückt in g/10 min, ([MFR(R-PP)]/[MFR(R-PP1)]) bevorzugt kleiner oder gleich 1,00 ist.

**6.** Einphasige statistische Propylen-Ethylen-Copolymer-Zusammensetzung (R-PP) nach einem der vorhergehenden Ansprüche, die einen relativen Gehalt an isolierten zu blockförmigen Ethylen-Sequenzen, I(E), von mindestens 71,0 %, bevorzugt mindestens 73,0 %, aufweist.

**7.** Einphasige statistische Propylen-Ethylen-Copolymer-Zusammensetzung (R-PP) nach einem der vorhergehenden Ansprüche, wobei der relative Gehalt an isolierten zu Block-Ethylen-Sequenzen, I(E), und der C2-Gehalt der statistischen Propylen-Ethylen-Copolymer-Zusammensetzung, C2(R-PP), die Ungleichung (Ia) erfüllen:

$$I(E) - 3{,}79[C2(R\text{-}PP)] \geq 57{,}0 \text{ (Ia)},$$

wobei stärker bevorzugt der relative Gehalt an isolierten zu Block-Ethylen-Sequenzen, I(E), und der C2-Gehalt der statistischen Propylen-Ethylen-Copolymer-Zusammensetzung, C2(R-PP), die Ungleichung (Ib) erfüllen:

$$I(E) - 3{,}79[C2(R\text{-}PP)] \geq 61{,}0 \text{ (Ib)}.$$

**8.** Einphasige statistische Propylen-Ethylen-Copolymer-Zusammensetzung (R-PP) nach einem der vorhergehenden Ansprüche, die eine oder mehrere, bevorzugt alle, der folgenden Eigenschaften aufweist:

a) einen Biegemodul, ermittelt nach ISO 178 an 80 x 10 x 4 $mm^3$ großen, nach EN ISO 1873-2 spritzgegossenen Prüfstäben, im Bereich von 500 bis 1500 MPa, und

b) eine Charpy-Kerbschlagzähigkeit bei 23 °C, ermittelt nach ISO 179 an 80 x 10 x 4 $mm^3$ großen, nach EN ISO 1873-2 spritzgegossenen Prüfstäben, im Bereich von 2,0 bis 20,0 $kJ/m^2$.

**9.** Verfahren zur Herstellung der einphasigen statistischen Propylen-Ethylen-Copolymer-Zusammensetzung (R-PP) nach einem der vorhergehenden Ansprüche, umfassend die folgenden Schritte:

a) Polymerisation von Propylen- und Ethylen-Comonomereinheiten in einem ersten Polymerisationsreaktor in Gegenwart eines Single-Site-Katalysators zur Herstellung eines ersten Polymerisationsgemischs, das die erste statistische Propylen-Ethylen-Copolymer-Fraktion (R-PP1) und den Single-Site-Katalysator enthält, wobei der erste Polymerisationsreaktor bevorzugt ein Suspensionsreaktor, insbesondere ein Schleifenreaktor ist,
b) Überführung des ersten Polymerisationsgemischs in einen zweiten Polymerisationsreaktor, bevorzugt einen Gasphasenreaktor,
c) Polymerisation von Propylen- und Ethylen-Comonomer-Einheiten in diesem zweiten Polymerisationsreaktor in Gegenwart des Single-Site-Katalysators zur Herstellung eines zweiten Polymerisationsgemischs, das die erste statistische Propylen-Ethylen-Copolymer-Fraktion (R-PP1), die zweite statistische Propylen-Ethylen-Copolymer-Fraktion (R-PP2) und den Single-Site-Katalysator enthält,
d) Entnehmen des zweiten Polymerisationsgemischs aus dem zweiten Polymerisationsreaktor und
e) Compoundieren des zweiten Polymerisationsgemischs, optional unter Zugabe von Additiven, um die einphasige statistische Propylen-Ethylen-Copolymer-Zusammensetzung (R-PP) zu bilden.

**10.** Verfahren nach Anspruch 9, wobei der Single-Site-Katalysator Folgendes umfasst:

(i) einen Metallocen-Komplex der allgemeinen Formel (III)

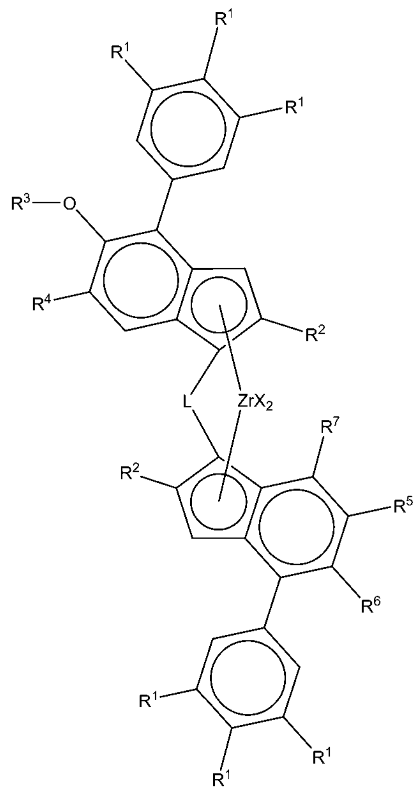

Formel (III)

wobei jedes X unabhängig voneinander ein Sigma-Donor-Liganden ist,
L eine divalente Brücke ist, ausgewählt aus $-R'_2C-$, $-R'_2C-CR'_2-$, $-R'_2Si-$, $-R'_2Si-SiR'_2-$, $-R'_2Ge-$, wobei jedes R' unabhängig voneinander ein Wasserstoffatom oder eine $C_1$-$C_{20}$-Hydrocarbyl-Gruppe ist, die optional ein oder mehrere Heteroatome aus den Gruppen 14-16 des Periodensystems oder Fluoratome enthält, oder wobei optional zwei R'-Gruppen zusammen einen Ring bilden können,
jedes $R^1$ unabhängig voneinander gleich oder unterschiedlich sein kann und Wasserstoff, eine lineare oder verzweigte $C_1$-$C_6$-Alkyl-Gruppe, eine $C_{7-20}$-Arylalkyl-Gruppe, eine $C_{7-20}$-Alkylaryl-Gruppe oder eine

$C_{6-20}$-Aryl-Gruppe oder eine OY-Gruppe ist, wobei Y eine $C_{1-10}$-Hydrocarbyl-Gruppe ist, und optional zwei benachbarte R1-Gruppen Teil eines Rings sein können, der die Phenylkohlenstoffe enthält, an die sie gebunden sind,
jedes $R^2$ unabhängig voneinander gleich ist oder unterschiedlich sein kann und eine $CH_2$-$R^8$-Gruppe ist, wobei $R^8$ H oder eine lineare oder verzweigte $C_{1-6}$-AlkylGruppe, eine $C_{3-8}$-Cycloalkyl-Gruppe oder eine $C_{6-10}$-Aryl-Gruppe ist,
$R^3$ eine lineare oder verzweigte $C_1$-$C_6$-Alkyl-Gruppe, eine $C_{7-20}$-Arylalkyl-Gruppe, eine $C_{7-20}$-Alkylaryl-Gruppe oder eine $C_6$-$C_{20}$-Aryl-Gruppe ist,
$R^4$ eine $C(R^9)_3$-Gruppe ist, wobei $R^9$ eine lineare oder verzweigte $C_1$-$C_6$-AlkylGruppe ist,
$R^5$ Wasserstoff oder eine aliphatische $C_1$-$C_{20}$-Hydrocarbyl-Gruppe ist, die optional ein oder mehrere Heteroatome aus den Gruppen 14-16 des Periodensystems enthält,
$R^6$ Wasserstoff oder eine aliphatische $C_1$-$C_{20}$-Hydrocarbyl-Gruppe ist, die optional ein oder mehrere Heteroatome aus den Gruppen 14-16 des Periodensystems enthält, oder
$R^5$ und $R^6$ zusammen einen fünfgliedrigen gesättigten Kohlenstoffring bilden können, der optional durch n Gruppen $R^{10}$ substituiert ist, wobei n zwischen 0 und 4 liegt,
jedes $R^{10}$ gleich oder unterschiedlich ist und eine $C_1$-$C_{20}$-Hydrocarbyl-Gruppe oder eine $C_1$-$C_{20}$-Hydrocarbyl-Gruppe sein kann, die optional ein oder mehrere Heteroatome aus den Gruppen 14-16 des Periodensystems enthält,
$R^7$ H oder eine lineare oder verzweigte $C_1$-$C_6$-Alkyl-Gruppe oder eine Aryl- oder Heteroaryl-Gruppe mit 6 bis 20 Kohlenstoffatomen ist, optional substituiert mit ein bis drei Gruppen $R^{11}$,
die einzelnen $R^{11}$ unabhängig voneinander gleich sind oder unterschiedlich sein können und Wasserstoff, eine lineare oder verzweigte $C_1$-$C_6$-Alkyl-Gruppe, eine $C_{7-20}$-Arylalkyl-Gruppe, eine $C_{7-20}$-Alkylaryl-Gruppe oder eine $C_{6-20}$-Aryl-Gruppe oder eine OY-Gruppe sind, wobei Y eine $C_{1-10}$-Hydrocarbyl-Gruppe ist,

(ii) einen Aluminoxan-Cokatalysator und
(iii) einen Siliciumdioxid-Träger.

**11.** Einphasige statistische Propylen-Ethylen-Copolymer-Zusammensetzung (R-PP) nach einem der Ansprüche 1 bis 8, wobei die einphasige statistische Propylen-Ethylen-Copolymer-Zusammensetzung (R-PP) durch das Verfahren nach Anspruch 9 oder Anspruch 10 erhältlich ist.

**12.** Artikel, insbesondere eine Folie, enthaltend die einphasige statistische Propylen-Ethylen-Copolymer-Zusammensetzung (R-PP) nach einem der Ansprüche 1 bis 8 oder 11 in einer Menge von mindestens 75 Gewichtsprozent, stärker bevorzugt mindestens 90 Gewichtsprozent, am stärksten bevorzugt mindestens 95 Gewichtsprozent.

**13.** Artikel nach Anspruch 12, der eine Folie ist, stärker bevorzugt eine Blasfolie, die eine oder mehrere, bevorzugt beide, der folgenden Eigenschaften aufweist:

a) einen Zug-Modul in Maschinenrichtung (MD), gemessen gemäß ISO 527-3, im Bereich von 500 bis 2000 MPa und/oder
b) einen Zug-Modul in Querrichtung (TD), gemessen nach ISO 527-3, im Bereich von 500 bis 2000 MPa.

**14.** Artikel nach Anspruch 12 oder 13, der eine Folie ist, stärker bevorzugt eine Blasfolie, die eine oder mehrere, bevorzugt beide, der folgenden Eigenschaften aufweist:

a) einen Trübungswert, bestimmt nach ASTM D1003, im Bereich von 0,0 bis 10,0 % und
b) eine Dart-Drop-Schlagzähigkeit, bestimmt nach ASTM D1709, Methode A, im Bereich von 40 bis 100 g.

**15.** Artikel nach einem der Ansprüche 12 bis 14, der eine Folie ist, stärker bevorzugt eine Blasfolie, die eine Siegelanfangstemperatur (SIT) im Bereich von 105 bis 130 °C aufweist, wobei bevorzugt die Differenz zwischen der Schmelztemperatur der einphasigen statistischen Propylen-Ethylen-Copolymer-Zusammensetzung (R-PP), bestimmt gemäß DSC-Analyse, und der Siegelanfangstemperatur (SIT) der Folie, stärker bevorzugt der Blasfolie, im Bereich von 10 bis 25 °C liegt.

## Revendications

**1.** Composition monophasique de copolymère statistique de propylène-éthylène (R-PP), comprenant :

a) 30 à 70 % en poids, par rapport au poids total de la composition de copolymère statistique de propylène-éthylène (R-PP), d'une première fraction de copolymère statistique de propylène-éthylène (R-PP1), présentant une teneur en éthylène, déterminée par spectroscopie RMN $^{13}C$ quantitative, dans la plage de 0,1 à 5,0 % en mole ;
b) 30 à 70 % en poids, par rapport au poids total de la composition de copolymère statistique de propylène-éthylène (R-PP), d'une seconde fraction de copolymère statistique de propylène-éthylène (R-PP2), présentant une teneur en éthylène, déterminée par spectroscopie RMN $^{13}C$ quantitative, dans la plage de 0,1 à 10,0 % en mole ;
dans laquelle la première fraction de copolymère statistique de propylène-éthylène (R-PP1) et la seconde fraction de copolymère statistique de propylène-éthylène (R-PP2) combinées constituent au moins 90 % en poids du poids total de la composition de copolymère statistique de propylène-éthylène (R-PP),
dans laquelle le rapport de la teneur en éthylène de la composition de copolymère statistique de propylène-éthylène (R-PP) par rapport à la teneur en éthylène de la première fraction de copolymère statistique de propylène-éthylène (R-PP1), toutes deux déterminées par spectroscopie RMN $^{13}C$ quantitative et exprimées en % en mole, ([C2(R-PP)]/[C2(R-PP1)]) est supérieur ou égal à 1,00,
dans laquelle la composition de copolymère statistique de propylène-éthylène (R-PP) présente une température de fusion, déterminée par analyse DSC, dans la plage de 120 à 145 °C et une teneur en régiodéfauts 2,1, telle que déterminée par spectroscopie RMN $^{13}C$ quantitative, dans la plage de 0,05 à 1,40 % en mole,
dans laquelle la composition de copolymère statistique de propylène-éthylène (R-PP) présente une teneur relative en séquences d'éthylène isolées par rapport à en blocs, I(E), supérieure ou égale à 70,0 % et dans laquelle la teneur relative en séquences d'éthylène isolées par rapport à en blocs, I(E), et la teneur en C2 de la composition de copolymère statistique de propylène-éthylène, C2(R-PP), satisfont l'inéquation (I),

$$I(E) - 3{,}79[C2(R\text{-}PP)] \geq 52{,}0 \quad (I),$$

dans laquelle la teneur I(E) est définie par l'équation (II) :

$$I(E) = \frac{fPEP}{(fEEE + fPEE + fPEP)} \times 100 \quad (II)$$

dans laquelle

I(E) est la teneur relative en séquences d'éthylène isolées par rapport à en blocs [en %] ;
fPEP est la fraction en mole des séquences de propylène/éthylène/propylène (PEP) dans l'échantillon ;
fPEE est la fraction en mole des séquences de propylène/éthylène/éthylène (PEE) et des séquences d'éthylène/éthylène/propylène (EEP) dans l'échantillon ;
fEEE est la fraction en mole des séquences d'éthylène/éthylène/éthylène (EEE) dans l'échantillon
dans laquelle les concentrations de toutes les séquences sont basées sur une analyse statistique en triades de données de RMN $^{13}C$.

**2.** Composition monophasique de copolymère statistique de propylène-éthylène (R-PP) selon la revendication 1, présentant un indice de fluidité à chaud ($MFR_2$), déterminé selon la norme ISO 1133 à 230 °C à une charge de 2,16 kg, dans la plage de 0,5 à 20 g/10 min.

**3.** Composition monophasique de copolymère statistique de propylène-éthylène (R-PP) selon la revendication 1 ou la revendication 2, présentant une teneur totale en éthylène, déterminée par spectroscopie RMN $^{13}C$ quantitative, dans la plage de 0,1 à 10,0 % en mole.

**4.** Composition monophasique de copolymère statistique de propylène-éthylène (R-PP) selon l'une des revendications précédentes, présentant une teneur en substances solubles dans le xylène froid (XCS), telle que déterminée selon la norme ISO 16152, dans la plage de 0,05 à 15,0 % en poids.

**5.** Composition monophasique de copolymère statistique de propylène-éthylène (R-PP) selon l'une des revendications précédentes, dans laquelle

a) la première fraction de copolymère statistique de propylène-éthylène (R-PP1) présente un indice de fluidité à chaud ($MFR_2$), déterminé selon la norme ISO 1133 à 230 °C à une charge de 2,16 kg, dans la plage de 0,5 à 20

g/10 min, et

b) la seconde fraction de copolymère statistique de propylène-éthylène (R-PP2) présente un indice de fluidité à chaud ($MFR_2$), déterminé selon la norme ISO 1133 à 230 °C à une charge de 2,16 kg, dans la plage de 0,5 à 20 g/10 min,

dans laquelle le rapport de l'indice de fluidité à chaud ($MFR_2$) de la composition de copolymère statistique de propylène-éthylène (R-PP) par rapport à l'indice de fluidité à chaud ($MFR_2$) de la première fraction de copolymère statistique de propylène-éthylène (R-PP1), tous deux déterminés selon la norme ISO 1133 à 230 °C à une charge de 2,16 kg et exprimés en g/10 min, ([MFR(R-PP)]/[MFR(R-PP1)]) est de préférence inférieur ou égal à 1,00.

**6.** Composition monophasique de copolymère statistique de propylène-éthylène (R-PP) selon l'une des revendications précédentes, présentant une teneur relative en séquences d'éthylène isolées par rapport à en blocs, I(E), supérieure ou égale à 71,0 %, de manière davantage préférée supérieure ou égale à 73,0 %.

**7.** Composition monophasique de copolymère statistique de propylène-éthylène (R-PP) selon l'une des revendications précédentes, dans laquelle la teneur relative en séquences d'éthylène isolées par rapport à en blocs, I(E), et la teneur en C2 de la composition de copolymère statistique de propylène-éthylène, C2(R-PP), satisfont l'inéquation (Ia)

$$I(E) - 3,79[C2(R\text{-}PP)] \geq 57,0 \quad (Ia),$$

de manière davantage préférée, la teneur relative en séquences d'éthylène isolées par rapport à en blocs, I(E), et la teneur en C2 de la composition de copolymère statistique de propylène-éthylène, C2(R-PP), satisfont l'inéquation (Ib)

$$I(E) - 3,79[C2(R\text{-}PP)] \geq 61,0 \quad (Ib).$$

**8.** Composition monophasique de copolymère statistique de propylène-éthylène (R-PP) selon l'une des revendications précédentes, présentant une ou plusieurs des propriétés suivantes, de préférence les deux :

a) un module de flexion, déterminé selon la norme ISO 178 en utilisant des barres d'essai de 80x10x4 $mm^3$ moulées par injection conformément à la norme EN ISO 1873-2, dans la plage de 500 à 1500 MPa, et

b) une résistance au choc sur éprouvette entaillée Charpy à 23 °C, déterminée selon la norme ISO 179 en utilisant des barres d'essai de 80x10x4 $mm^3$ moulées par injection conformément à la norme EN ISO 1873-2, dans la plage de 2,0 à 20,0 $kJ/m^2$.

**9.** Procédé de production de la composition monophasique de copolymère statistique de propylène-éthylène (R-PP) selon l'une des revendications précédentes, comprenant les étapes suivantes :

a) la polymérisation de motifs comonomères de propylène et d'éthylène dans un premier réacteur de polymérisation en présence d'un catalyseur monosite pour produire un premier mélange de polymérisation comprenant la première fraction de copolymère statistique de propylène-éthylène (R-PP1) et le catalyseur monosite, dans lequel le premier réacteur de polymérisation est de préférence un réacteur pour suspension, de manière davantage préférée un réacteur à boucle ;

b) le transfert du premier mélange de polymérisation dans un second réacteur de polymérisation, de préférence un réacteur pour phase gazeuse ;

c) la polymérisation de motifs comonomères de propylène et d'éthylène dans ledit second réacteur de polymérisation en présence dudit catalyseur monosite pour produire un second mélange de polymérisation comprenant la première fraction de copolymère statistique de propylène-éthylène (R-PP1), la seconde fraction de copolymère statistique de propylène-éthylène (R-PP2) et le catalyseur monosite ;

d) le retrait dudit second mélange de polymérisation dudit second réacteur de polymérisation ; et

e) le mélange dudit second mélange de polymérisation optionnellement avec l'ajout d'additifs pour former la composition monophasique de copolymère statistique de propylène-éthylène (R-PP).

**10.** Procédé selon la revendication 9, dans lequel le catalyseur monosite comprend :

(i) un complexe de métallocène de formule générale (III)

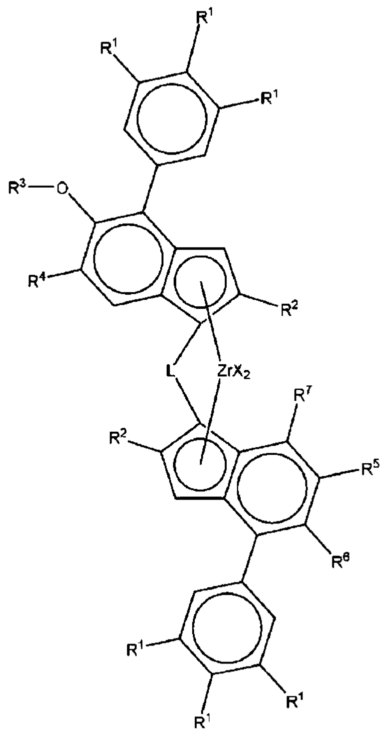

Formule (III)

dans lequel chaque X est indépendamment un ligand donneur sigma,

L est un pont divalent sélectionné parmi $-R'_2C-$, $-R'_2C-CR'_2-$, $-R'_2Si-$, $-R'_2Si-SiR'_2-$, $-R'_2Ge-$, dans lequel chaque R' est indépendamment un atome d'hydrogène ou un groupe hydrocarbyle en $C_1$-$C_{20}$ contenant optionnellement un ou plusieurs hétéroatomes des groupes 14 à 16 du tableau périodique ou atomes de fluor, ou optionnellement deux groupes R' pris ensemble peuvent former un cycle,

les $R^1$ sont chacun indépendamment identiques ou peuvent être différents et sont un hydrogène, un groupe alkyle linéaire ou ramifié en $C_1$-$C_6$, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$, et optionnellement deux groupes $R^1$ adjacents peuvent faire partie d'un cycle comprenant les carbones du phényle auxquels ils sont liés,

les $R^2$ sont chacun indépendamment identiques ou peuvent être différents et sont un groupe $CH_2$-$R^8$, $R^8$ étant H ou un groupe alkyle linéaire ou ramifié en $C_{1-6}$, un groupe cycloalkyle en $C_3$-$C_8$, un groupe aryle en $C_6$-$C_{10}$,

$R^3$ est un groupe alkyle linéaire ou ramifié en $C_1$-$C_6$, un arylalkyle en $C_{7-20}$, un groupe alkylaryle en $C_{7-20}$ ou un groupe aryle en $C_6$-$C_{20}$,

$R^4$ est un groupe $C(R^9)_3$, $R^9$ étant un groupe alkyle linéaire ou ramifié en $C_1$-$C_6$,

$R^5$ est un hydrogène ou un groupe hydrocarbyle en $C_1$-$C_{20}$ aliphatique contenant optionnellement un ou plusieurs hétéroatomes des groupes 14 à 16 du tableau périodique ;

$R^6$ est un hydrogène ou un groupe hydrocarbyle en $C_1$-$C_{20}$ aliphatique contenant optionnellement un ou plusieurs hétéroatomes des groupes 14 à 16 du tableau périodique ; ou

$R^5$ et $R^6$ peuvent être pris ensemble pour former un cycle carboné saturé à 5 chaînons qui est optionnellement substitué avec n groupes $R^{10}$, n étant de 0 à 4 ;

les $R^{10}$ sont identiques ou différents et peuvent être un groupe hydrocarbyle en $C_1$-$C_{20}$, ou un groupe hydrocarbyle en $C_1$-$C_{20}$ contenant optionnellement un ou plusieurs hétéroatomes appartenant aux groupes 14 à 16 du tableau périodique ;

$R^7$ est H ou un groupe alkyle linéaire ou ramifié en $C_1$-$C_6$ ou un groupe aryle ou hétéroaryle ayant 6 à 20 atomes de carbone optionnellement substitué avec un à trois groupes $R^{11}$, les $R^{11}$ sont chacun indépendamment identiques ou peuvent être différents et sont un hydrogène, un groupe alkyle linéaire ou ramifié en $C_1$-$C_6$, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$,

(ii) un cocatalyseur de type aluminoxane, et
(iii) un support en silice.

11. Composition monophasique de copolymère statistique de propylène-éthylène (R-PP) selon l'une des revendications 1 à 8, dans laquelle la composition monophasique de copolymère statistique de propylène-éthylène (R-PP) peut être obtenue par le procédé selon la revendication 9 ou la revendication 10.

12. Article, de manière davantage préférée un film, comprenant la composition monophasique de copolymère statistique de propylène-éthylène (R-PP) selon l'une des revendications 1 à 8 ou 11 en une quantité d'au moins 75 % en poids, de manière davantage préférée d'au moins 90 % en poids, de manière préférée entre toutes d'au moins 95 % en poids.

13. Article selon la revendication 12 qui est un film, de manière davantage préférée un film soufflé, présentant une ou plusieurs des propriétés suivantes, de préférence les deux :

a) un module de traction dans le sens machine (MD), mesuré selon la norme ISO 527-3, dans la plage de 500 à 2000 MPa ; et/ou
b) un module de traction dans le sens transversal (TD), mesuré selon la norme ISO 527-3, dans la plage de 500 à 2000 MPa.

14. Article selon la revendication 12 ou 13 qui est un film, de manière davantage préférée un film soufflé, présentant une ou plusieurs des propriétés suivantes, de préférence les deux :

a) une valeur de trouble, déterminée selon la norme ASTM D1003, dans la plage de 0,0 à 10,0 %, et
b) une résistance à l'impact par chute de dard (DDI), déterminée selon la norme ASTM D1709, méthode A, dans la plage de 40 à 100 g.

15. Article selon l'une des revendications 12 à 14 qui est un film, de manière davantage préférée un film soufflé, présentant une température de début de collage (SIT) dans la plage de 105 à 130 °C, de préférence dans lequel la différence entre la température de fusion de la composition monophasique de copolymère statistique de propylène-éthylène (R-PP), déterminée par analyse DSC, et la température de début de collage (SIT) du film, de manière davantage préférée du film soufflé, est dans la plage de 10 à 25 °C.

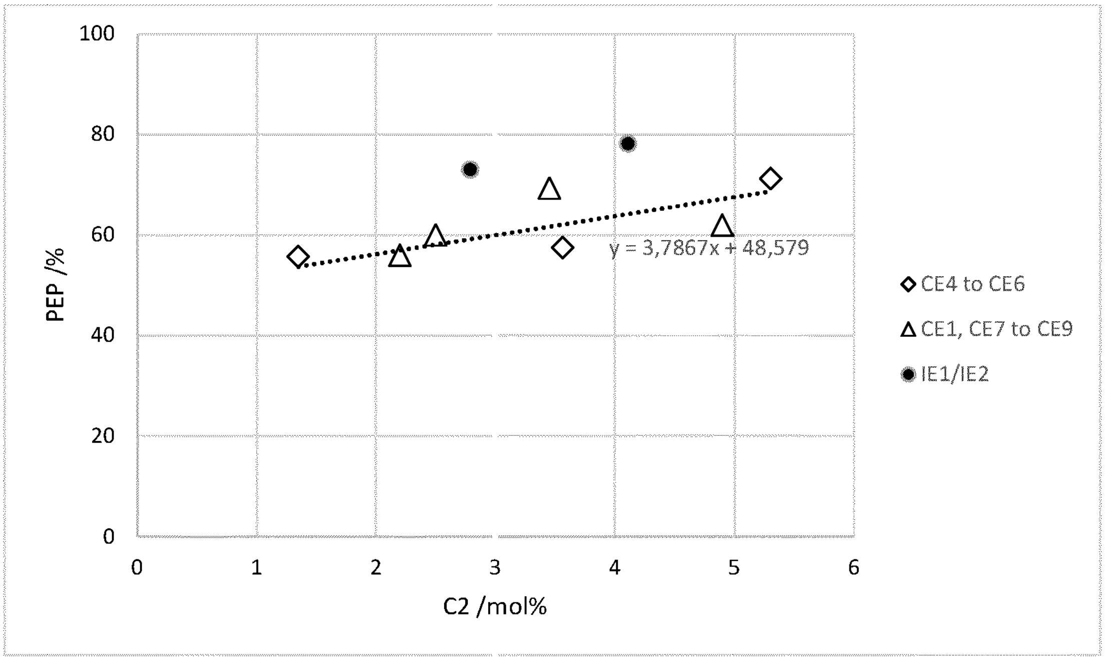


**Figure 1** Relative content of isolated to block ethylene sequences, I(E), as a function of ethylene content

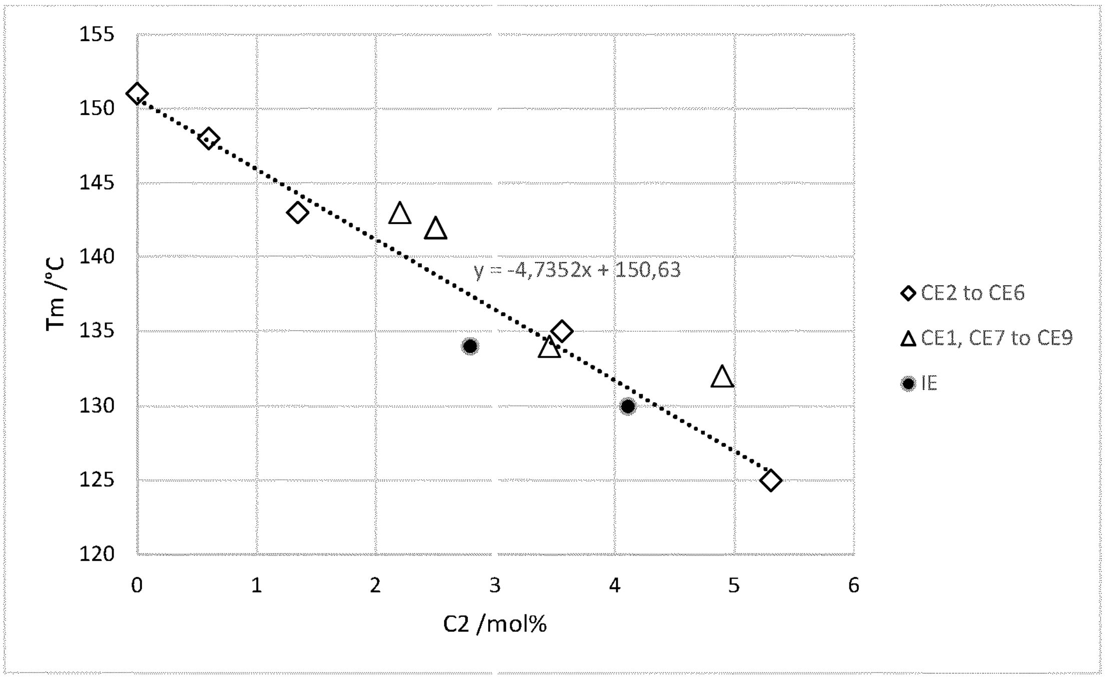


**Figure 2** Melting temperature, Tm, as a function of ethylene content

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014154610 A1
- WO 2014187686 A1
- EP 3280768 A1
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 2019179959 A
- WO 2020239602 A1
- WO 2019179959 A1
- WO 2022043385 A1
- WO 2011043385 A1
- WO 2016162359 A1


### Non-patent literature cited in the description


- **HANS ZWEIFEL**. Plastic Additives Handbook. 2001, 871-873
- **BUSICO, V** ; **CIPULLO, R.** *Prog. Polym. Sci.*, 2001, vol. 26, 443
- **BUSICO, V** ; **CIPULLO, R.** ; **MONACO, G** ; **VACATELLO, M** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R** ; **TAHA, A** ; **BAUGH, D** ; **WINNIFORD, B**. *J. Mag. Reson.*, 2007, vol. 187, 225
- **BUSICO, V.** ; **CARBONNIERE, P** ; **CIPULLO, R** ; **PELLECCHIA, R** ; **SEVERN, J** ; **TALARICO, G**. *Macromol. Rapid Commun*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **BUSICO, V.** ; **CIPULLO, R.** *Prog. Polym. Sci.*, 2001, vol. 26, 443
- **BUSICO, V.** ; **CIPULLO, R.** ; **MONACO, G** ; **VACATELLO, M.** ; **SEGRE, A.L.** *Macromolecules*, 1997, vol. 30, 6251
- **RESCONI, L** ; **CAVALLO, L** ; **FAIT, A** ; **PIEMONTESI, F.** *Chem. Rev.*, 2000, vol. 100, 1253
- **KAKUGO, M** ; **NAITO, Y.** ; **MIZUNUMA, K** ; **MIYATAKE, T.** *Macromolecules*, 1982, vol. 15, 1150